(19) Europäisches Patentamt / European Patent Office / Office européen des brevets

(11) **EP 3 104 637 A1**

(12) **EUROPEAN PATENT APPLICATION**
published in accordance with Art. 153(4) EPC

(43) Date of publication:
**14.12.2016 Bulletin 2016/50**

(21) Application number: **14881739.8**

(22) Date of filing: **04.06.2014**

(51) Int Cl.:
$H04W\ 16/28^{(2009.01)}$  $H04B\ 7/02^{(2006.01)}$
$H04B\ 7/06^{(2006.01)}$

(86) International application number:
**PCT/JP2014/002962**

(87) International publication number:
**WO 2015/118582 (13.08.2015 Gazette 2015/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **05.02.2014 JP 2014019972**

(71) Applicant: **Mitsubishi Electric Corporation Chiyoda-ku Tokyo 100-8310 (JP)**

(72) Inventors:
• **MASUDA, Shinji Tokyo 100-8310 (JP)**
• **SANO, Hiroyasu Tokyo 100-8310 (JP)**

(74) Representative: **Pfenning, Meinig & Partner mbB Patent- und Rechtsanwälte Theresienhöhe 11a 80339 München (DE)**

(54) **BASE STATION, COMMUNICATION SYSTEM, AND COMMUNICATION METHOD**

(57) A base station of a communication system including the base station forming a communication area partly overlapping a communication area of another station and a control station controlling the base station includes: a data reception unit that receives same data as data transmitted from the control station to the another station from the control station; a phase rotation amount information reception unit that receives phase rotation amount information from the control station; a phase offset unit that assigns phase rotation to the data on a basis of the phase rotation amount information input from the phase rotation amount information reception unit; and a transmission unit that transmits the data to which the phase rotation is assigned.

FIG.2

## Description

Field

The present invention relates to a base station, a communication system, and a transmission method.

Background

In a radio communication system, in the case of a system (same-frequency multiple-station simultaneous transmission system) in which timing is synchronized in a plurality of base stations, and same information is transmitted at a same frequency, there is a problem in that, at a place where the communication areas of base stations overlap each other, so-called beat interference occurs in which the phases of transmission signals are composed at opposite phases, and the reception power level is lowered. In a case where a mobile station is located at a place where the beat interference occurs, a situation occurs in which a signal cannot be received from a base station within an area of the base station. Regarding such beat interference, in Patent Literature 1, a method has been disclosed in which signals having mutually-different timings are transmitted from two antennas of a same base station, and the occurrence of beat interference is suppressed, and, on the reception side, an adaptive equalization process is performed, and the signals having mutually-different timings are separated and composed. Furthermore, a method has been disclosed in which, in a case where signals are transmitted from a plurality of base stations, the signals are transmitted with mutually-different frequency deviations among the base stations, a time during which the phases of the transmission signals are composed at opposite phases is decreased, and the reception capability is improved.

Citation List

Patent Literature

Patent Literature 1: Japanese Patent Application Laid-Open No. 2002-300097

Summary

Technical Problem

In a conventional radio communication system, since signals having mutually-different timings are transmitted from two antennas of a base station, an adaptive equalization process that is a complex process is necessary on the reception side. In addition, since signals are transmitted with mutually-different frequency deviations between base stations, there is a problem in that the reception capability is degraded for a system having low resistance for frequency deviations.
The present invention is in consideration of the problems described above, and an object thereof is to suppress the influence of occurring beat interference without performing a complex process on the reception side.

Solution to Problem

According to an aspect of the present invention in order to solve the above mentioned problems and achieve the object, there is provided a base station of a communication system including the base station forming a communication area partly overlapping a communication area of another station and a control station controlling the base station, the base station including: a data reception unit that receives same data as data transmitted from the control station to the another station from the control station; a phase rotation amount information reception unit that receives phase rotation amount information from the control station; a phase offset unit that assigns phase rotation to the data on a basis of the phase rotation amount information; and a transmission unit that transmits the data to which the phase rotation is assigned.

Advantageous Effects of Invention

According to the present invention, a base station performs a phase rotation process that is different for each frame for a transmission signal. Accordingly, on the reception side, the influence of beat interference can be suppressed without performing a complex process.

Brief Description of Drawings

FIG. 1 is a diagram illustrating an example of the configuration of a radio communication system according to a first embodiment.
FIG. 2 is a diagram illustrating an example of the configuration of a base station according to the first embodiment.
FIG. 3 is a diagram illustrating an example of the configuration of a mobile station according to the first embodiment.
FIG. 4 is a flowchart of the radio communication system according to the first embodiment.
FIG. 5 is a diagram illustrating an example of the configuration of a radio communication system according to a second embodiment.
FIG. 6 is a diagram illustrating an example of the configuration of a base station according to the second embodiment.
FIG. 7 is a diagram illustrating an example of the configuration of a mobile station according to the second embodiment.
FIG. 8 is a diagram illustrating an example of the configuration of a radio communication system according to a third embodiment.
FIG. 9 is a diagram illustrating an example of the configuration of a base station according to the third embodiment.
FIG. 10 is a diagram illustrating an example of the configuration of a radio communication system according to a fourth embodiment.
FIG. 11 is a diagram illustrating an example of the configuration of a base station according to the fourth embodiment.
FIG. 12 is a diagram illustrating an example of the relation between the frequency and the frame of a signal transmitted by a base station according to a fifth embodiment.

Description of Embodiments

Hereinafter, the present invention will be described in detail with reference to the drawings. However, the present invention is not limited to these embodiments.

First Embodiment.

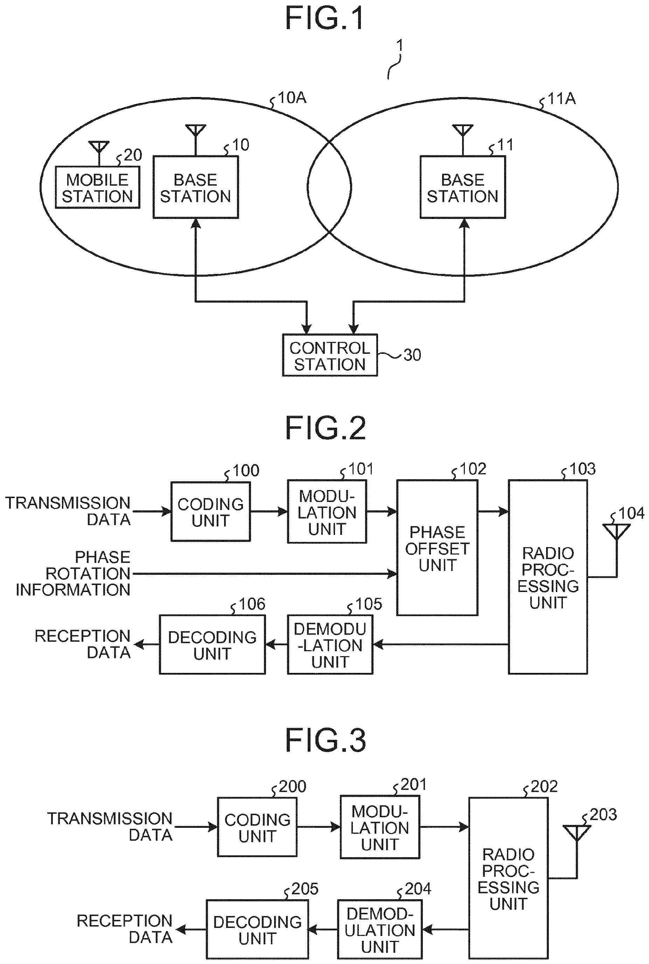

FIG. 1 is a diagram illustrating an example of the configuration of a radio communication system according to the present embodiment. A radio communication system 1 is configured by: a base station 10 that forms a communication area 10A; a base station 11 that forms a communication area 11A; a mobile station 20; and a control station 30. The base station 10 and the base station 11 are neighboring to each other, and there is an area in which the communication area 10A and the communication area 11A overlap each other. Here, the number of base stations, the number of mobile stations, and the number of control stations are not limited to those illustrated in FIG. 1.

Each of the base station 10 and the base station 11 wirelessly transmits data received from the control station 30 to the mobile station 20 and transmits data wirelessly received from the mobile station 20 to the control station 30 under the control of the control station 30.

The mobile station 20 transmits/receives data to/from the control station 30 through the base station 10 and the base station 11 or through one of the base station 10 and the base station 11.

The control station 30 is connected to each base station (here, the base station 10 and the base station 11) and controls each base station. In addition, the control station 30 is connected to at least one or more base stations and transmits and receives data to be exchanged with the mobile station 20. Furthermore, the control station 30 transmits phase rotation information to each base station.

Next, the configuration and the operation of the base station 10 will be described with reference to FIG. 2. The base station 10 includes: a coding unit 100; a modulation unit 101; a phase offset unit 102; a radio processing unit 103; an antenna 104; a demodulation unit 105; and a decoding unit 106.

The coding unit 100 performs error correction coding (ECC) of transmission data received from the control station 30. In the present embodiment, a method used for the error correction coding (ECC) is not limited to a specific method. The modulation unit 101 modulates the error correction coded (ECC) data. In the present embodiment, the modulation system is not limited to a specific system.

The phase offset unit 102 performs phase rotation of a modulated symbol output from the modulation unit 101 on the basis of the phase rotation information received from the control station 30 and outputs a resultant symbol as a phase-rotated symbol. For example, in a case where the phase rotation information represents a phase rotation period T, a phase rotation amount assigned to the modulated symbol can be represented in the following (Equation 1).

$$sr_n = s_n exp(j2\pi i/T) \quad \cdots \text{ (Equation 1)}$$

Here, $s_n$ represents a modulated symbol expressed by a complex number, j is an imaginary unit, i is a transmission frame number, and $sr_n$ is a phase-rotated symbol expressed by a complex number.

The radio processing unit 103 converts a phase-rotated symbol that is a modulated symbol of which the phase is rotated by the phase offset unit 102 into an RF (Raido Frequency) signal and outputs the RF signal to the antenna 104. The antenna 104 transmits the phase rotation symbol converted into the RF signal. In addition, the radio processing unit 103 converts the signal received by the antenna 104 into a baseband signal. The role of the transmission unit is achieved by using some functions of the radio processing unit 103 and the antenna 104.

As can be understood from (Equation 1), the phase rotated symbol $sr_n$ is acquired by assigning a phase rotation amount, which is different according to the transmission frame number i, to the modulated symbol $s_n$. Accordingly, the base station 10 can assign a phase rotation amount different for each transmission frame and transmit a resultant transmission frame. As the control station 30 sets the phase rotation amounts of the transmission frames transmitted from the base station 10 and the base station 11 to be different from each other, the base station 10 and the base station 11 can transmit the transmission frames with mutually-different phase rotation amounts being assigned thereto.

For example, in a case where the control station 30 transmits a phase rotation period T = 4 to the base station 10 as phase rotation information and transmits a phase rotation period T = -4 to the base station 11 as phase rotation information, phase rotations of 0, $\pi/2$, $\pi$, $3\pi/2$, 0, ... [rad] are assigned to the frames of a transmission signal in the base station 10, and the phase rotations of 0, $3\pi/2$, $\pi$, $\pi/2$, 0, ... [rad] are assigned to the frames of a transmission signal in the base station 11. Accordingly, a relative phase relation between the transmission signals of the base stations can be changed by $\pi$ [rad] for each frame, whereby the influence of beat interference can be suppressed.

The demodulation unit 105 demodulates a baseband signal converted by the radio processing unit 103. The decoding unit 106 performs error correction decoding of a signal after the demodulation, thereby acquiring reception data. The base station 10 acquires this reception data and transmits the acquired reception data to the control station 30. Here, while the configuration of the base station 10 has been described, the base station 11 and the base station 10 have the same configuration.

Next, the configuration and the operation of the mobile station 20 will be described with reference to FIG. 3. The mobile station 20 includes: a coding unit 200; a modulation unit 201; a radio processing unit 202; an antenna 203; a demodulation unit 204; and a decoding unit 205.

The radio processing unit 202 converts an RF signal received from the base station 10 and the base station 11 or at least one of the base station 10 and the base station 11 through the antenna 203 into a baseband signal. The demodulation unit 204 demodulates the baseband signal converted by the radio processing unit 202. The decoding unit 205 performs error correction decoding of a signal after the demodulation, thereby acquiring reception data.

In a case where data is transmitted from the mobile station 20, the coding unit 200 performs error correction coding (ECC) of transmission data. In the present embodiment, a method used for the error correction coding (ECC) is not limited to a specific method. The modulation unit 201 modulates the error correction-coded (ECC) data and outputs a modulated symbol. In the present embodiment, the modulation system is not limited to a specific system. The radio processing unit 202 converts the modulated symbol into an RF signal and transmits the RF signal from the antenna 203 to the base station 10 and the base station 11 or at least one of the base station 10 and the base station 11.

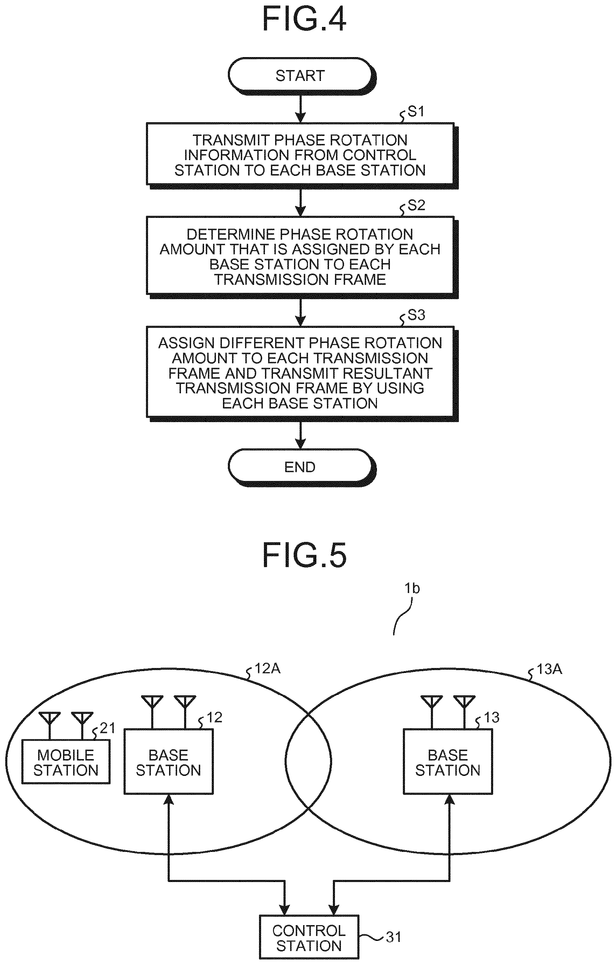

Next, the operation of the radio communication system according to the present embodiment will be described with reference to a flowchart illustrated FIG. 4. First, in the radio communication system 1, the control station 30 transmits phase rotation information to the base station 10 and the base station 11 (Step S1). In addition, the control station includes: a data transmission unit that transmits same data to each base station; and a phase rotation amount information transmission unit that transmits phase rotation amount information to the base station. The phase offset unit 102 of each of the base station 10 and the base station 11 determines a phase rotation amount assigned to each transmission frame on the basis of the phase rotation information supplied from the control station 30 (Step S2). Then, the phase offset unit 102 of each of the base station 10 and the base station 11 assigns a phase rotation amount that is different for each transmission frame, and the antenna 104 transmits a transmission frame to which the phase rotation amount is assigned (Step S3).

In the radio communication system 1, since a plurality of base stations are installed so as to cover all the area in which communication with the mobile station 20 is necessary, areas in which communication areas of the base stations overlap each other are generated. In the present embodiment, on the basis of the phase rotation information supplied from the control station 30, the base station 10 and the base station 11 rotate transmission signals to have different phases for each frame. Accordingly, the mobile station 20 can suppress the occurrence of beat interference without performing a complex process.

In addition, in the present embodiment, while the control station 30 has been described to transmit the phase rotation information to each base station, the present invention is not limited thereto. Each base station may generate the phase rotation information for itself. Furthermore, in the present embodiment, while each base station has been described to rotate the phase to be different for each frame, the present invention is not limited thereto. The control station 30 may be configured to generate each frame, rotate the phase thereof, and transmit the frame to each base station.

In addition, in the present embodiment, while the number of base stations has been described to be two, the present invention is not limited thereto. For example, in a case where the present invention is used for train radio, base stations are installed along a track such that the communication areas of the base stations cover the track. In such a case, the control station may be configured to transmit different phase rotation information to even-numbered base stations and odd-numbered stations among the base stations aligned along the track. In such a case, a mobile station installed to a train can suppress the occurrence of beat interference also in communication areas overlapping each other.

Second Embodiment.

In the present embodiment, a case will be described in which each base station and a mobile station include a plurality of antennas and perform transmission diversity. Here, in the description, parts different from those of the first embodiment will be focused on.

FIG. 5 is a diagram illustrating an example of the configuration of a radio communication system according to the present embodiment. The radio communication system 1b is configured by: a base station 12 that forms a communication area 12A; a base station 13 that forms a communication area 13A; a mobile station 21; and a control station 31. The base station 12 and the base station 13 are neighboring to each other, and there is an area in which the communication area 12A and the communication area 13A overlap each other. Here, the number of base stations, the number of mobile stations, and the number of control stations are not limited to those illustrated in FIG. 5.

In the present embodiment, a case will be described in which each of the base station 12, the base station 13, and the mobile station 21 includes a plurality of antennas, and transmission diversity and reception diversity are applied to each station. Here, as an example, while a case where time space coding is used as a method used by each station for transmitting data from a plurality of antennas will be described, the method is not limited thereto, but the time space coding may not be used. In addition, in the present embodiment, while each of the base station 12, the base station 13, and the mobile station 21 is described to include two antennas, the present invention is not limited thereto.

Each of the base station 12 and the base station 13 wirelessly transmits data received from the control station 31 to the mobile station 21 and transmits data wirelessly received from the mobile station 21 to the control station 31 under the control of the control station 31.

The mobile station 21 transmits/receives data to/from the control station 31 through the base station 12 and the base station 13 or at least one of the base station 12 and the base station 13.

The control station 31 is connected to each base station (here, the base station 12 and the base station 13) and controls each base station. In addition, the control station 31 is connected to at least one or more base stations and transmits/receives data to be exchanged with the mobile station 21. Furthermore, the control station 31 transmits phase rotation information to the base station 12 and the base station 13. The control station 31 transmits phase rotation information, which is to be transmitted to the base station 12 and the base station 13, corresponding to the number of antennas of each base station. Here, the phase rotation information transmitted by the control station 31 may be different for each antenna of each base station. In such a case, beat interference in an area in which communication areas overlap each other can be suppressed without using the time space coding.

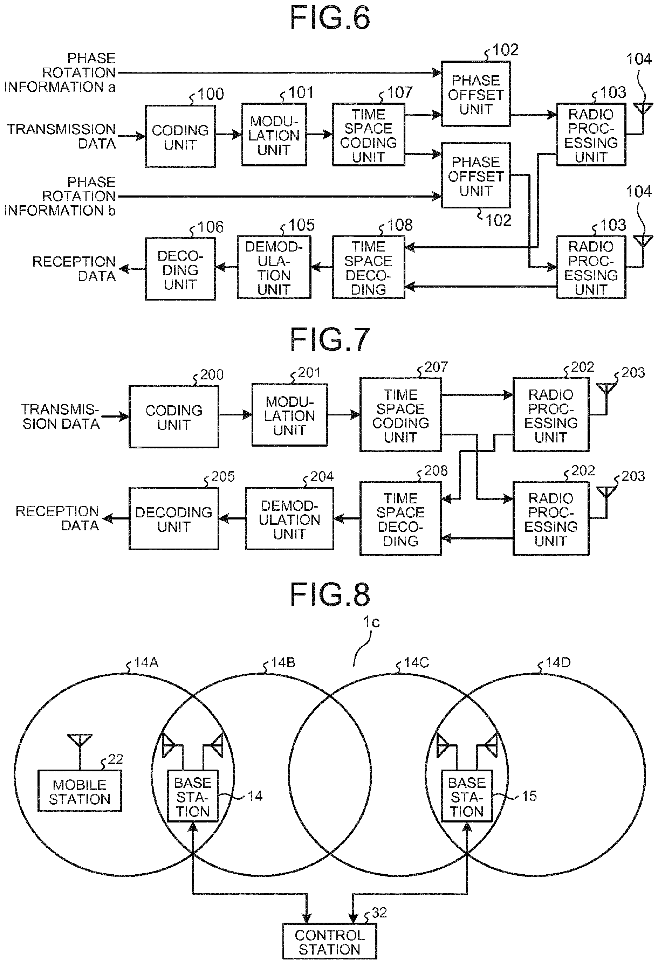

Next, the configuration and the operation of the base station 12 will be described with reference to FIG. 6. The base station 12 includes: a coding unit 100; a modulation unit 101; two phase offset units 102; two radio processing units 103; two antennas 104; a demodulation unit 105; a decoding unit 106; a time space coding unit 107; and a time space decoding unit 108. Each of the base station 12 and the base station 13 transmits and receives data using two antennas.

The operations of the coding unit 100 to the decoding unit 106 are similar to those of the base station 10 (see FIG. 2) according to the first embodiment. The base station 12 and the base station 13 are different from the base stations 10 and 11 according to the first embodiment in that the time space coding unit 107 and the time space decoding unit 108 are added, and the number of the phase offset units 102, the number of the radio processing units 103, and the number of the antennas 104 are two.

The operation of each phase offset unit 102 is similar to the operation of the phase offset unit 102 according to the first embodiment described above. At this time, the control station 31 respectively transmits phase rotation information a and phase rotation information b to the two phase offset units 102.

The phase rotation information a and the phase rotation information b may have a same value or different values. For example, in a case where time space coding is not used in transmission diversity, but a same signal is transmitted from each antenna, by configuring the phase rotation information a and the phase rotation information b to have mutually-different values, beat interference between signals transmitted from the base station 12 in the communication area 12A can be suppressed. On the other hand, in a case where time space coding is used in the transmission diversity, signals transmitted from the antennas are orthogonal to each other, and beat interference does not occur, whereby the phase rotation information a and the phase rotation information b may be configured to have a same value.

In addition, as the control station 31 configures the phase rotation amounts transmitted to the phase offset 102 of the base station 12 and the phase offset 102 of the base station 13 to have mutually-different values, the phase offset 102 of the base station 12 and the phase offset 102 of the base station 13 can transmit data with mutually-different phase rotation amounts assigned thereto.

The time space coding unit 107 performs time space coding of a modulated symbol output from the modulation unit 101. The time space coding unit 107 outputs transmission symbol strings, which are orthogonal to each other, corresponding to two antennas, for example, by using STBC (Space Time Block Coding) of Alamouti, DSTBC (Differential Space Time Block Coding) of Tarokh, or the like as the time space coding method.

In addition, in an overlapping area, even in a case where the time space coding is used, some of signals transmitted from the base station 12 and some of signals transmitted from the base station 13 are in a non-orthogonal relation, and accordingly, beat interference occurs. However, by configuring the phase rotation amounts transmitted to the phase offset 102 of the base station 12 and the phase offset 102 of the base station 13 to have mutually-different values, the control station 31 can suppress beat interference also in an overlap area.

The time space decoding unit 108, after performing a decoding process corresponding to the time space coding performed on the transmission side for each received baseband signal output from each radio processing 103, composes decoded baseband signals, and outputs a resultant signal to the demodulation unit 105. In addition, in the radio communication system 1b, the time space coding methods used in the base station 12, the base station 13, and the mobile station 21 are assumed to be known. Here, while the configuration and the operation of the base station 12 have been described, the base station 13 has a configuration similar thereto.

Next, the configuration and the operation of the mobile station 21 will be described with reference to FIG. 7. The mobile station 21 includes: a coding unit 200; a modulation unit 201; two radio processing units 202; two antennas 203; a demodulation unit 204; a decoding unit 205; a time space coding unit 207; and a time space coding unit 208. The mobile station 21 transmits and receives data using two antennas 203.

The operations of the coding unit 200 to the decoding unit 205 are similar to those of the mobile station 20 (see FIG. 3) according to the first embodiment. There are differences from the mobile station 20 according to the first embodiment in that the time space coding unit 207 and the time space decoding unit 208 are added, and the number of the radio processing units 202 and the number of the antennas 203 are two. In the mobile station 21, while two radio processing units 202 and two antennas 203 are included, the operations of the radio processing unit 202 and the antenna 203 are similar to those according to the first embodiment. In addition, the operation of the time space coding unit 207 is similar to the operation of the time space coding unit 107 described above, and the operation of the time space decoding unit 208 is similar to the operation of the time space decoding unit 108 described above.

In the radio communication system 1b, a plurality of base stations are installed so as to cover all the area in which communication with the mobile station 21 is necessary, and areas in which communication areas of the base stations overlap each other are generated. In such areas, signals having a non-orthogonal relation are received by the mobile station from the base station 12 and the base station 13. However, in the present embodiment, the base station 12 and the base station 13 rotate transmission signals to have phases different for each frame. Accordingly, in this way, the occurrence of beat interference can be suppressed in the mobile station 21.

In addition, in the present embodiment, while the control station 31 has been described to transmit the phase rotation information to each base station, the present invention is not limited thereto. Each base station may generate the phase rotation information for itself. Furthermore, in the present embodiment, while each base station has been described to rotate the phase to be different for each frame, the present invention is not limited thereto. The control station 31 may be configured to generate each frame to be transmitted by each base station, rotate the phase thereof, and transmit the frame to each base station.

In addition, in the present embodiment, while the number of base stations has been described to be two, the present invention is not limited thereto. For example, in a case where the present invention is used for train radio, base stations are installed along a track such that the communication areas of the base stations cover the track. In such a case, the control station may be configured to transmit same phase rotation information to even-numbered base stations among the base stations aligned along the track and transmit same phase rotation information to odd-numbered stations. In such a case, a mobile station installed to a train can suppress the occurrence of beat interference also in communication areas overlapping each other.

Third Embodiment.

In the present embodiment, a case will be described in which each base station includes a plurality of antennas having directivity and forms a plurality of communication areas. Here, in the description, parts different from those of the first embodiment will be focused on.

FIG. 8 is a diagram illustrating an example of the configuration of a radio communication system according to the present embodiment. The radio communication system 1c is configured by: a base station 14 that forms communication areas 14A and 14B; a base station 15 that forms communication areas 15A and 15B; a mobile station 22; and a control station 32. The base station 14 and the base station 15 are neighboring to each other, and there is an area in which the communication area 14B and the communication area 15A overlap each other. Here, the number of base stations, the number of mobile stations, and the number of control stations are not limited to those illustrated in FIG. 8.

Each of the base station 14 and the base station 15 wirelessly transmits data received from the control station 32 to the mobile station 22 and transmits data wirelessly received from the mobile station 22 to the control station 32 under the control of the control station 32.

The mobile station 22 transmits/receives data to/from the control station 32 through the base station 14 and the base station 15 or one of the base station 14 and the base station 15.

The control station 32 is connected to each base station (here, the base station 14 and the base station 15) and controls each base station. In addition, the control station 32 is connected to at least one or more base stations and transmits and receives data to be exchanged with the mobile station 22. Furthermore, the control station 32 transmits phase rotation information to each base station. The control station 32 transmits phase rotation information, which is to be transmitted to the base station 14 and the base station 15, corresponding to the number of antennas of each base station.

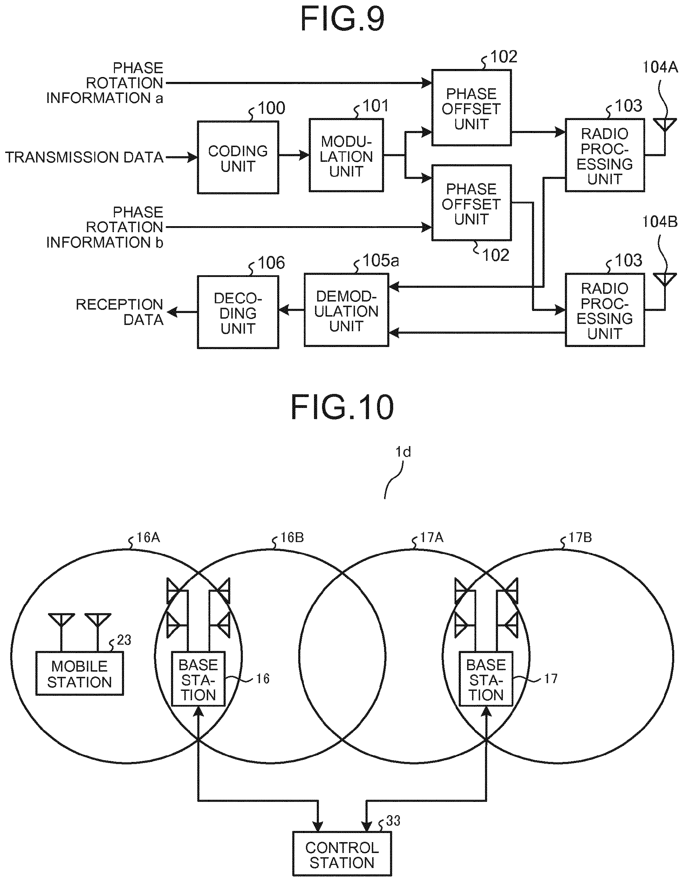

Next, the configuration and the operation of the base station 14 will be described with reference to FIG. 9. The base station 14 includes: a coding unit 100; a modulation unit 101; two phase offset units 102; two radio processing units 103; two antennas 104A and 104B; a demodulation unit 105a; and a decoding unit 106. The operations of the coding unit 100 and the modulation unit 101 are similar to those according to the first embodiment.

A modulated symbol that is the output of the modulation unit 101 is input to the two phase offset units 102. While the operation of the phase offset unit 102 is similar to that of the phase offset unit 102 according to the first embodiment, different phase rotation information is input to the phase offset units 102. In the case of same phase rotation information, on the periphery of the own base station 14, in the mobile station 22 that receives a signal transmitted from the antenna 104A and a signal transmitted from the antenna 104B, there is a possibility that beat interference occurs. For this reason, by inputting different phase rotation information to the phase offset units, beat interference on the periphery of the base station 14 can be suppressed.

In addition, as the control station 32 configures the phase rotation amounts to be transmitted to the base station 14 and the base station 15 to have mutually-different values, beat interference in an area in which the communication area 14B and the communication area 15A overlap can be suppressed. Particularly, in a case where the mobile station 22 is installed to a train, and the base stations are installed along a track, the control station 32 configures the phase rotation amounts transmitted to even-numbered base stations among the base stations installed along the track and odd-numbered stations to have mutually-different values.

The phase-rotated symbols that are outputs from two phase offset units are input to the radio processing units 103 different from each other and are transmitted from antennas 104A and 104B different from each other. The antennas 104A and 104B transmit signals so as to form communication areas different from each other.

For example, in a case where the mobile station 22 is installed to a train, and the base stations are installed along a track, the antennas need to form communication areas in the upward direction (a direction toward a side illustrated in the drawing) of the track and in the downlink direction. For this reason, for example, one antenna 104A out of the two antennas is directed toward an area in the upward direction of the track, and the other antenna 104B is directed toward an area in the downward direction.

The base station 14 converts signals, which have been supplied from the mobile station 22, received by using the antennas 104A and 104B into baseband signals by using the radio processing units 103 and inputs the baseband signals to the demodulation unit 105a. The demodulation unit 105a performs diversity composition after demodulation processes and performs error correction decoding by using the decoding unit 106 so as to acquire reception data and transmits the reception data to the control station 30.

Here, while the configuration and the operation of the base station 14 have been described, the base station 15 has a configuration similar thereto. The configuration and the operation of the mobile station 22 may be configured similar to the mobile station 20 (see FIG. 3) illustrated in the first embodiment.

In the radio communication system 1c, a plurality of base stations are installed so as to cover all the area in which communication with the mobile station 22 is necessary, and areas in which communication areas of the base stations overlap each other are generated. In the present embodiment, transmission signals transmitted in each communication area (the communication area 14A and the communication area 14B) of the base station 14 and each communication area (the communication area 15A and the communication area 15B) of the base station 15 are rotated by phases different for each frame. Accordingly, the occurrence of beat interference can be suppressed in the mobile station 22.

In addition, in the present embodiment, while the control station has been described to transmit the phase rotation information to each base station, the present invention is not limited thereto. Each base station may generate the phase rotation information for itself. Furthermore, in the present embodiment, while each base station has been described to rotate the phase to be different for each frame, the present invention is not limited thereto. The control station may be configured to generate each frame to be transmitted by each base station and rotate the phase thereof.

In addition, in the present embodiment, the base station 14 and the base station 15 may be configured to perform time space coding of a modulated symbol output from the modulation unit 101 by using the space coding unit 107 of the base station (FIG. 6) described in the second embodiment. The time space coding unit outputs transmission symbols, which are orthogonal to each other, corresponding to two antennas on the basis of the modulated symbol. In such a case, a signal transmitted from one antenna 104A forming the communication area 14B of the base station 14 and a signal transmitted from one antenna 104B forming the communication area 15A of the base station 15 are orthogonal to each other. For this reason, both the signals are orthogonal to each other, and beat interference is suppressed. In a case where the base station 14 and the base station 15 are sequentially installed along a track in an alternating manner by using such a configuration, a train advancing along the track can suppress beat interference also in a communication area that is common to the base station 14 and the base station 15.

In such a case, between communication areas neighboring to each other, beat interference can be suppressed without performing phase rotation for each frame of the transmission signal. However, depending on the configuration of the communication areas, there is a case where communication areas that are separate by one or more areas overlap each other, and beat interference occurs in a case where communication areas transmitting a same signal overlap each other. In such a case, by assigning phase rotation different for each frame, the beat interference can be suppressed.

In addition, in the present embodiment, also in a case where the center frequency of a transmitted signal is different for each base station, by assigning different phase rotation to each frame of a transmission signal transmitted from each antenna of the base station, there is an effect of suppressing the beat interference on the periphery of the base station.

Fourth Embodiment.

In the present embodiment, a case will be described in which each base station includes a plurality of antennas, performs transmission diversity, and forms a plurality of communication areas. Here, in the description, parts different from those of the first embodiment will be focused on.

FIG. 10 is a diagram illustrating an example of the configuration of a radio communication system according to the present embodiment. The radio communication system 1d is configured by: a base station 16 that forms communication areas 16A and 16B; a base station 17 that forms communication areas 17A and 17B; a mobile station 23; and a control station 33. The base station 16 and the base station 17 are neighboring to each other, and there is an area in which the communication area 16B and the communication area 17A overlap each other. Here, the number of base stations, the number of mobile stations, and the number of control stations are not limited to those illustrated in FIG. 10.

In the present embodiment, a case will be described in which each of the base station 16, the base station 17, and the mobile station 23 has four antennas, and, transmission diversity and reception diversity are applied to each station. Here, while it will be described that two antennas form one antenna set, there are two sets (a total of four antennas) of antenna sets, and each antenna set has different directivity, the configuration is not limited thereto. For example, it may be configured such that two antennas forms one antenna set, and there are three sets of antenna sets. In addition, while a case will be described in which time space coding is used as a method used by each station for transmitting signals from a plurality of antennas, the method is not limited thereto.

Each of the base station 16 and the base station 17 wirelessly transmits data received from the control station 33 to the mobile station 23 and transmits data wirelessly received from the mobile station 23 to the control station 33 under the control of the control station 33.

The mobile station 23 transmits/receives data to/from the control station 33 through the base station 16 and the base station 17 or one of the base station 16 and the base station 17.

The control station 33 is connected to each base station (here, the base station 16 and the base station 17) and controls each base station. In addition, the control station 33 is connected to at least one or more base stations and transmits/receives data to be exchanged with the mobile station 23. Furthermore, the control station 33 transmits phase rotation information to each base station. While the control station 33 will be described to transmit phase rotation information, which is to be transmitted to the base station 16 and the base station 17, corresponding to the number of antennas of each base station, the present invention is not limited thereto. Thus, phase rotation information corresponding to the number of antenna sets of each base station may be transmitted.

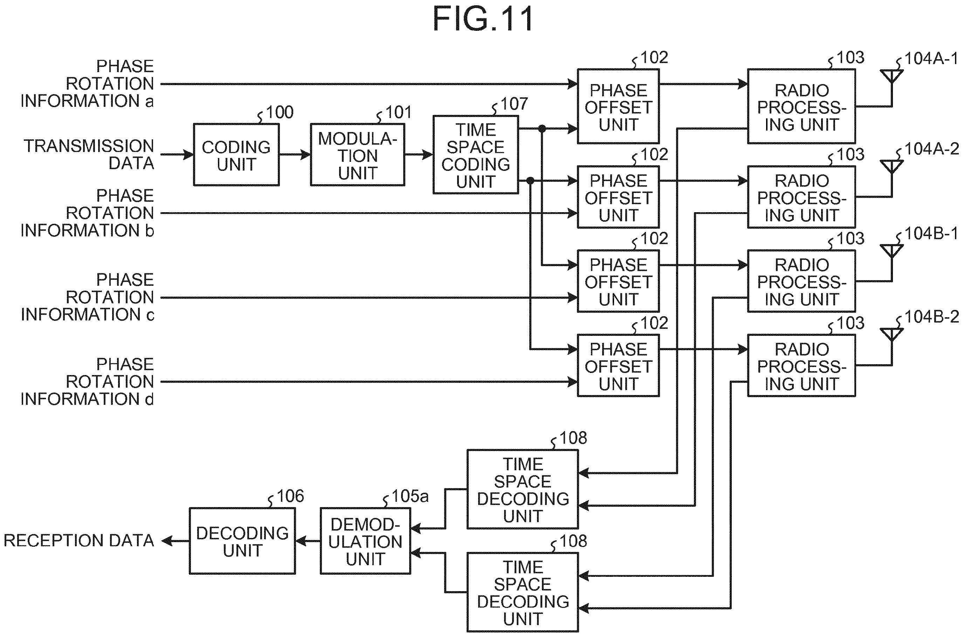

Next, the configuration and the operation of the base station 16 will be described with reference to FIG. 11. The base station 16 includes: a coding unit 100; a modulation unit 101; four phase offset units 102; four radio processing units 103; an antennas 104A-1; an antenna 104A-2; an antenna 104B-1; an antenna 104B-2; a demodulation unit 105a;

a decoding unit 106; a time space coding unit 107; and two time space decoding units 108.

The operations of the coding unit 100 and the modulation unit 101 are similar to those of the first embodiment. The operation of the time space coding unit 107 is similar to that of the second embodiment.

The transmission symbols corresponding to two antennas that are outputs of the time space coding unit 107 are input to the two phase offset units 102. The operation of each phase offset unit 102 is similar to that of the phase offset unit 102 according to the first embodiment. Hereinafter, the phase rotation information input to each phase offset unit will be described.

There are cases where phase rotation information (for example, phase rotation information a and b or phase rotation information c and d) of transmission signals forming one communication area may have a same value, and there are cases where the phase rotation information may have different values. For example, in a case where the communication area 16A is formed, in a case where the time space coding is not used in transmission diversity, in a case where a same signal is transmitted from antennas, by configuring the phase rotation information a and the phase rotation information b to have mutually different values, beat interference between signals transmitted from the base station 16 in the communication area 16A can be suppressed. On the other hand, in a case where the time space coding is used in the transmission diversity, signals transmitted from the antennas are orthogonal to each other, and thus, beat interference does not occur, and accordingly, the phase rotation information a and the phase rotation information b may have a same value.

In a case where different communication areas are formed, for example, in a case where the communication area 16A and the communication area 16B are formed, by configuring the phase rotation information (for example, the phase rotation information a and c or the phase rotation information b and d) of transmission signals to have mutually-different values, on the periphery of the own base station 16, beat interference between signals transmitted from the base station 16 can be suppressed. Even in a case where the time space coding is used in the transmission diversity, on the periphery of the base station 16, when the phase rotation information a and the phase rotation information c have a same value, and the phase rotation information b and the phase rotation information d have a same value, beat interference occurs. Thus, by configuring the phase rotation information a and the phase rotation information c to have mutually-different values and configuring the phase rotation information b and the phase rotation information d to have mutually-difference values, the beat interference can be suppressed.

In addition, the control station 33 can suppress beat interference in an area in which the communication area 16B and the communication area 17A overlap each other by configuring the phase rotation amounts transmitted to the base station 16 and the base station 17 to have mutually-different values.

The phase rotation symbols output from four phase offset units are converted into RF signals by the radio processing units 103 and are transmitted from the antenna 104A-1, the antenna 104A-2, the antenna 104B-1, and the antenna 104B-2.

From the antenna 104A-1 and the antenna 104A-2, signals corresponding to transmission symbols corresponding to two antennas, which are generated by the time space coding unit 107, are transmitted. Signals transmitted from the antenna 104A-1 and the antenna 104A-2 are signals that are orthogonal to each other through the time space coding. Meanwhile, signals transmitted from the antenna 104B-1 and the antenna 104B-2 are similar thereto. A set of the antenna 104A-1 and the antenna 104A-2 and a set of the antenna 104B-1 and the antenna 104B-2 transmit signals so as to form communication areas that are different from each other.

The base station 16 converts signals, which have been supplied from the mobile station 22, received using the two antennas 104A-1 and 104A-2 into baseband signals by using the radio processing units 103 and inputs the baseband signals to the time space decoding units 108. In addition, similarly, signals received using the two antennas 104B-1 and 104B-2 are converted into baseband signals by using the radio processing units 103, and the baseband signals are inputs to the time space decoding units 108. The operation of the time space decoding unit is similar to that of the time space decoding unit 108 according to the second embodiment. After a demodulation process is performed using the demodulation units 105a for the outputs of the two time space decoding units 108, diversity composition is performed for the demodulated outputs, and error correction decoding is performed for the composed output to receive reception data by using the decoding unit 106. Then, the reception data is transmitted to the control station 33.

Here, while the configuration and the operation of the base station 16 have been described, the base station 17 has a configuration similar thereto. The configuration and the operation of the mobile station 23 may be configured similar to the mobile station 22 (see FIG. 7) illustrated in the second embodiment. In addition, the base station 16 and the base station 17 may be configured by using two configurations (see FIG. 5) each formed by the base station 12 and the base station 13 illustrated in the second embodiment.

In the radio communication system 1d, a plurality of base stations are installed so as to cover all the area in which communication with the mobile station is necessary, and each base station forms a plurality of areas, and accordingly, areas in which communication areas of the base stations overlap each other are generated. In the present embodiment, in the radio communication system 1d, transmission signals transmitted in each communication area of the base station 16 and each communication area of the base station 17 are rotated by phases different for each frame.

Accordingly, a time during which beat interference occurs can be shortened.

In addition, in the present embodiment, while the control station has been described to transmit the phase rotation information to each base station, the present invention is not limited thereto. Each base station may generate the phase rotation information for itself. Furthermore, in the present embodiment, while each base station has been described to rotate the phase to be different for each frame, the present invention is not limited thereto. The control station may be configured to generate each frame to be transmitted by each base station and rotate the phase thereof.

Particularly, in a case where the time space coding is used in the transmission diversity, signals having no mutual-orthogonal relation among signals transmitted from one antenna set forming the communication area 16B of the base station 16 and signals transmitted from one antenna set forming the communication area 17A of the base station 17 causes beat interference to occur. In such a case, transmission signals transmitted in each communication area of the base station 16 and each communication area of the base station 17 are rotated by phases different for each frame. Accordingly, a time during which beat interference occurs can be shortened.

By using this configuration, in a case where the control station 33 transmits signals to be transmitted to the base station 16 to even-numbered base stations among the base stations installed along a track and transmits signals to be transmitted to the base station 17 to odd-numbered base stations, a train advancing along the track can suppress beat interference also in an overlapping communication area.

Fifth Embodiment.

In the present embodiment, a case will be described in which hopping of the frequency of data transmitted in the radio communication system 1 is performed. The frequency hopping is a technology for changing the frequency for transmitting a signal in a short time. In the present embodiment, the frequency is changed for each transmission frame, and the base station transmits data using different frequencies in transmission frames that are neighboring to each other back and forth. Here, in the description, parts different from those of the first embodiment will be focused on.

Base stations 10 and 11 have the configuration illustrated in FIG. 2. A mobile station 20 has the configuration illustrated in FIG. 3. When a phase rotation symbol is converted into an RF signal, a radio processing unit 103 of the base station 10 changes the frequency to another frequency through frequency hopping for each transmission frame. The radio processing unit 103 may maintain the pattern of hopping frequencies in advance or may receive the pattern of hopping frequencies from a control station 30.

A radio processing unit 202 of the mobile station 20, similar to the radio processing units 103 of the base stations 10 and 11, performs frequency hopping. When a modulated symbol is converted into an RF signal, the radio processing unit 202 changes the frequency to another frequency through frequency hopping for each transmission frame. The radio processing unit 202 may maintain the pattern of hopping frequencies in advance, may receive the pattern of hopping frequencies from the base station 10, or may receive the pattern of hopping frequencies from the control station 30 through the base station 10.

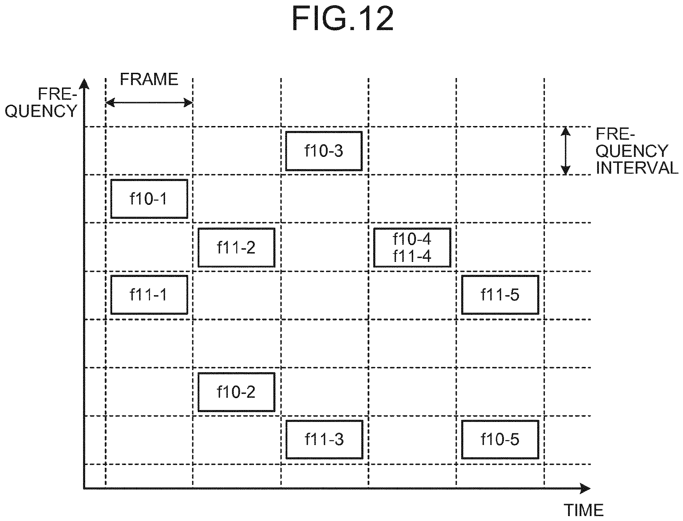

FIG. 12 is a diagram illustrating an example of the relation between the frequency and the frame of a signal transmitted by the base station according to the present embodiment. The horizontal axis represents the time, and the vertical axis represents the frequency. While the horizontal axis is partitioned by using a plurality of dotted lines arranged in the vertical direction, each section represents a frame. Frame numbers are assumed to be assigned to the frames in order of 1, 2, 3, ⋯ from the left side. While the vertical axis is partitioned by using a plurality of dotted lines arranged in the horizontal direction, each section represents a frequency interval. A signal f10-i is transmitted by the base station 10. A signal f11-i is transmitted by the base station 11. Here, i is an integer of one or more and represents a frame number. For frame numbers of 1 to 3 and 5, a signal transmitted from the base station 10 and a signal transmitted from the base station 11 have mutually-different frequencies, and accordingly, beat interference does not occur.

A signal f10-4 and a signal f11-4 of the frame number 4 are transmitted using a same frequency in the same frame. When these two signals are composed at the opposite phases, beat interference occurs in the mobile station 20 receiving the composed signal. Also in a case where the base station 10 and the base station 11 use different patterns of hopping frequencies, there are cases where signals are transmitted using a same frequency in a same frame. In a case where the repetition period of the hopping frequencies and the repetition period of the phase rotation are the same, and there is a frame in which beat interference occurs, the beat interference occurs periodically and repeatedly.

Thus, the base stations 10 and 11 perform phase rotation of signals of frames at a period different from the repetition period of the hopping frequencies. Accordingly, the base stations 10 and 11 can suppress the occurrence of beat interference.

In the present embodiment, while an example has been described in which the base stations 10 and 11 and the mobile station 20 of the radio communication system 1 perform frequency hopping, the base stations 12 and 13 and the mobile station 21 of the radio communication system 1b according to the second embodiment, the base stations 14 and 15 and the mobile station 22 of the radio communication system 1c according to the third embodiment, or the base stations 16 and 17 and the mobile station 23 of the radio communication system 1d according to the fourth embodiment may be configured to perform frequency hopping. In any of the cases, beat interference can be suppressed.

Industrial Applicability

As described above, the base station according to the present invention is useful for a radio communication system and, particularly, is suitable for a case where communication areas overlap each other in a plurality of base stations.

Reference Signs List

1, 1b, 1c, and 1d radio communication system, 10, 11, 12, 13, 14, 15, 16, and 17 base station, 20, 21, 22, 23 mobile station, 10A, 11A, 12A, 13A, 14A, 14B, 15A, 15B, 16A, 16B, 17A, and 17B communication area, 100 and 200 coding unit, 101 and 201 modulation unit, 102 phase offset unit, 103 and 202 radio processing unit, 104 and 203 antenna, 105 and 204 demodulation unit, 106 and 205 decoding unit, 107 and 207 time space coding unit, 108 and 208 time space decoding unit

**Claims**

1. A base station of a communication system including the base station forming a communication area partly overlapping a communication area of another station and a control station controlling the base station, the base station comprising:

   a data reception unit that receives same data as data transmitted from the control station to the another station from the control station;
   a phase rotation amount information reception unit that receives phase rotation amount information from the control station;
   a phase offset unit that assigns phase rotation to the data on a basis of the phase rotation amount information; and
   a transmission unit that transmits the data to which the phase rotation is assigned.

2. The base station according to claim 1, further comprising a time space coding unit that generates two transmission symbol strings orthogonal to each other through time space coding for the data,
   wherein the phase rotation assigning unit assigns phase rotation to the transmission symbol strings orthogonal to each other generated by the time space coding unit.

3. The base station according to claim 2, wherein the transmission unit includes two antennas and includes a first antenna that transmits one signal, to which the phase rotation is assigned, out of the two transmission symbol strings orthogonal to each other and a second antenna that transmits the other signal to which the phase rotation is assigned.

4. A base station of a communication system including the base station that includes a first antenna having directivity for a first communication area and a second antenna having directivity for a second communication area partly overlapping a communication area of another station and a control station that controls the base station, the base station comprising:

   a data reception unit that receives same data as data transmitted from the control station to the another station from the control station;
   a phase rotation amount information reception unit that receives first phase rotation amount information and second phase rotation amount information from the control station; and
   a phase offset unit that assigns phase rotation to the data on a basis of the first phase rotation amount information and transmits resultant data to the first antenna and assigns phase rotation to the data on a basis of the second phase rotation amount information and transmits resultant data to the second antenna.

5. A base station of a communication system including the base station that includes first and second antennas having directivity for a first communication area and third and fourth antennas having directivity for a second communication area partly overlapping a communication area of another station and a control station that controls the base station, the base station comprising:

   a data reception unit that receives same data as data transmitted from the control station to the another station from the control station;

a time space coding unit that generates two transmission symbols orthogonal to each other through time space coding for the data;

a phase rotation amount information reception unit that receives first phase rotation amount information and second phase rotation amount information from the control station; and

a phase offset unit that assigns phase rotation to one of the two transmission symbols on a basis of the first phase rotation amount information and transmits resultant data to the first antenna, assigns phase rotation to the other on a basis of the first phase rotation amount information and transmits resultant data to the second antenna, assigns phase rotation to one of the two transmission symbols on a basis of the second phase rotation amount information and transmits resultant data to the third antenna, and assigns phase rotation to the other on a basis of the second phase rotation amount information and transmits resultant data to the fourth antenna.

6. A base station of a communication system including the base station that includes first and second antennas having directivity for a first communication area and third and fourth antennas having directivity for a second communication area partly overlapping a communication area of another station and a control station that controls the base station, the base station comprising:

a data reception unit that receives same data as data transmitted from the control station to the another station from the control station;

a time space coding unit that generates two transmission symbols orthogonal to each other through time space coding for the data;

a phase rotation amount information reception unit that receives first phase rotation amount information, second phase rotation amount information, third phase rotation amount information, and fourth phase rotation amount information from the control station; and

a phase offset unit that assigns phase rotation to one of the two transmission symbols on a basis of the first phase rotation amount information and transmits resultant data to the first antenna, assigns phase rotation to the other on a basis of the second phase rotation amount information and transmits resultant data to the second antenna, assigns phase rotation to one of the two transmission symbols on a basis of the third phase rotation amount information and transmits resultant data to the third antenna, and assigns phase rotation to the other on a basis of the fourth phase rotation amount information and transmits resultant data to the fourth antenna.

7. A communication system comprising:

a first base station that forms a first communication area;

a second base station that forms a second communication area partly overlapping the first communication area; and

a control station that controls each base station,

wherein the control station includes a data transmission unit that transmits same data to each base station and a phase rotation amount information transmission unit that transmits phase rotation amount information to each base station, and

wherein the base station includes a phase offset unit that assigns phase rotation to the data on a basis of the phase rotation amount information and a transmission unit that transmits the data to which the phase rotation is assigned.

8. A transmission method used in a base station of a communication system including the base station forming a communication area partly overlapping a communication area of another station and a control station that controls the base station, the transmission method comprising:

a data reception step of receiving same data as data transmitted from the control station to the another station from the control station;

a phase rotation amount information reception step of receiving phase rotation amount information from the control station;

a phase offset step of assigning phase rotation to the data on a basis of the phase rotation amount information; and

a transmission step of transmitting the data to which the phase rotation is assigned.

9. The base station according to any one of claims 1 to 3, wherein the transmission unit transmits the data to which the phase rotation is assigned using mutually-different frequencies in transmission frames that are neighboring to each other back and forth.

10. The base station according to claim 4, further comprising: a transmission unit that includes the first and second antennas, transmits data to which phase rotation on a basis of the first phase rotation amount information is assigned by using mutually-different frequencies in transmission frames that are neighboring to each other back and forth from the first antenna, and transmits data to which phase rotation on a basis of the second phase rotation amount information is assigned by using mutually-different frequencies in the transmission frames that are neighboring to each other back and forth from the second antenna.

11. The base station according to claim 5, further comprising: a transmission unit that includes the first to fourth antennas, transmits a signal acquired by assigning phase rotation to one of the two transmission symbols on a basis of the first phase rotation amount information by using mutually-different frequencies in transmission frames that are neighboring to each other back and forth from the first antenna, transmits a signal acquired by assigning phase rotation to the other on a basis of the first phase rotation amount information by using mutually-different frequencies in the transmission frames that are neighboring to each other back and forth from the second antenna, transmits a signal acquired by assigning phase rotation to one of the two transmission symbols on a basis of the second phase rotation amount information by using mutually-different frequencies in the transmission frames that are neighboring to each other back and forth from the third antenna, and transmits a signal acquired by assigning phase rotation to the other on a basis of the second phase rotation amount information by using mutually-different frequencies in the transmission frames that are neighboring to each other back and forth from the fourth antenna.

12. The base station according to claim 6, further comprising: a transmission unit that includes the first to fourth antennas, transmits a signal acquired by assigning phase rotation to one of the two transmission symbols on a basis of the first phase rotation amount information by using mutually-different frequencies in transmission frames that are neighboring to each other back and forth from the first antenna, transmits a signal acquired by assigning phase rotation to the other on a basis of the second phase rotation amount information by using mutually-different frequencies in the transmission frames that are neighboring to each other back and forth from the second antenna, transmits a signal acquired by assigning phase rotation to one of the two transmission symbols on a basis of the third phase rotation amount information by using mutually-different frequencies in the transmission frames that are neighboring to each other back and forth from the third antenna, and transmits a signal acquired by assigning phase rotation to the other on a basis of the fourth phase rotation amount information by using mutually-different frequencies in the transmission frames that are neighboring to each other back and forth from the fourth antenna.

13. The communication system according to claim 7, wherein the transmission unit of the base station transmits the data to which the phase rotation is assigned by using mutually-different frequencies in transmission frames that are neighboring to each other back and forth.

14. The transmission method according to claim 8, wherein, in the transmission step, the data to which the phase rotation is assigned is transmitted by using mutually-different frequencies in transmission frames that are neighboring to each other back and forth.

EP 3 104 637 A1

# FIG.1

# FIG.2

# FIG.3

# FIG.4

```
         ┌──────────────┐
         │    START     │
         └──────┬───────┘
                │
                ▼                              ⌇S1
   ┌─────────────────────────────────┐
   │    TRANSMIT PHASE ROTATION      │
   │    INFORMATION FROM CONTROL     │
   │  STATION TO EACH BASE STATION   │
   └────────────────┬────────────────┘
                    │
                    ▼                          ⌇S2
   ┌─────────────────────────────────┐
   │    DETERMINE PHASE ROTATION     │
   │ AMOUNT THAT IS ASSIGNED BY EACH │
   │       BASE STATION TO EACH      │
   │       TRANSMISSION FRAME        │
   └────────────────┬────────────────┘
                    │
                    ▼                          ⌇S3
   ┌─────────────────────────────────┐
   │ ASSIGN DIFFERENT PHASE ROTATION │
   │  AMOUNT TO EACH TRANSMISSION    │
   │ FRAME AND TRANSMIT RESULTANT    │
   │ TRANSMISSION FRAME BY USING     │
   │       EACH BASE STATION         │
   └────────────────┬────────────────┘
                    │
                    ▼
         ┌──────────────┐
         │     END      │
         └──────────────┘
```

# FIG.5

# FIG.6

PHASE
ROTATION
INFORMATION a

TRANSMISSION
DATA → CODING UNIT `100` → MODU-LATION UNIT `101` → TIME SPACE CODING UNIT `107` → PHASE OFFSET UNIT `102` → RADIO PROC-ESSING UNIT `103` → `104`

PHASE
ROTATION
INFORMATION b → PHASE OFFSET UNIT `102`

RECEPTION DATA ← DECODING UNIT `106` ← DEMOD-ULA-TION UNIT `105` ← TIME SPACE DECODING `108` ← RADIO PROC-ESSING UNIT `103` → `104`

# FIG.7

TRANSMIS-SION DATA → CODING UNIT `200` → MODU-LATION UNIT `201` → TIME SPACE CODING UNIT `207` → RADIO PROC-ESSING UNIT `202` → `203`

RECEPTION DATA ← DECODING UNIT `205` ← DEMOD-ULATION UNIT `204` ← TIME SPACE DECODING `208` ← RADIO PROC-ESSING UNIT `202` → `203`

# FIG.8

1c

14A          14B          14C          14D

MOBILE STATION `22`

BASE STA-TION `14`

BASE STA-TION `15`

CONTROL STATION `32`

# FIG.9

# FIG.10

# FIG.11

# FIG.12

## INTERNATIONAL SEARCH REPORT

| | International application No. |
|---|---|
| | PCT/JP2014/002962 |

| A. CLASSIFICATION OF SUBJECT MATTER |
|---|
| *H04W16/28*(2009.01)i, *H04B7/02*(2006.01)i, *H04B7/06*(2006.01)i |

According to International Patent Classification (IPC) or to both national classification and IPC

| B. FIELDS SEARCHED |
|---|
| Minimum documentation searched (classification system followed by classification symbols) |
| H04W16/28, H04B7/02, H04B7/06 |

| Documentation searched other than minimum documentation to the extent that such documents are included in the fields searched |
|---|
| Jitsuyo Shinan Koho           1922–1996   Jitsuyo Shinan Toroku Koho   1996–2014 |
| Kokai Jitsuyo Shinan Koho   1971–2014   Toroku Jitsuyo Shinan Koho   1994–2014 |

Electronic data base consulted during the international search (name of data base and, where practicable, search terms used)

| C. DOCUMENTS CONSIDERED TO BE RELEVANT |

| Category* | Citation of document, with indication, where appropriate, of the relevant passages | Relevant to claim No. |
|---|---|---|
| X<br>Y | JP 2013-017025 A  (Hitachi Kokusai Electric Inc.),<br>24 January 2013 (24.01.2013),<br>paragraphs [0019] to [0027], [0034], [0036], [0041], [0042]; fig. 1<br>(Family: none) | 1,4,7,8<br>2,3,5,6,9-14 |
| Y | WO 2012/001937 A1  (Hitachi Kokusai Electric Inc.),<br>05 January 2012 (05.01.2012),<br>claim 1; paragraph [0025]<br>& JP 2012-15682 A | 2,3,5,6,9-14 |
| Y | JP 2009-005037 A  (Hitachi, Ltd.),<br>08 January 2009 (08.01.2009),<br>claim 1; paragraphs [0003], [0024]<br>(Family: none) | 9-14 |

| ☐ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 August, 2014 (26.08.14) | 02 September, 2014 (02.09.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 3 104 637 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002300097 A